(19) **Europäisches Patentamt**
**European Patent Office**
**Office européen des brevets**

(11) **EP 4 744 501 A1**

(12) **EUROPEAN PATENT APPLICATION**

(43) Date of publication:
20.05.2026 Bulletin 2026/21

(51) International Patent Classification (IPC):
*A23G 9/04* $^{(2006.01)}$     *A23G 9/38* $^{(2006.01)}$
*A23G 9/42* $^{(2006.01)}$

(21) Application number: 24212795.9

(22) Date of filing: **13.11.2024**

(52) Cooperative Patent Classification (CPC):
**A23G 9/38; A23G 9/04; A23G 9/42**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **MAGNUM IP HOLDINGS B.V.**
**1017 BM Amsterdam (NL)**

(72) Inventor: **The designation of the inventor has not
yet been filed**

(74) Representative: **Potter Clarkson**
**Chapel Quarter**
**Mount Street**
**Nottingham NG1 6HQ (GB)**

(54) **NON-DAIRY FROZEN CONFECTION**

(57)     The present invention relates to a non-dairy frozen confection comprising fat in an amount 1 to 10 wt%, sugars in an amount of 15 to 35 wt%, and protein in an amount of 0.2 to 3 wt%, wherein the protein comprises *Chlorella* protein **P1** and pulse protein **P2.**

EP 4 744 501 A1

## Description

### Field of the invention

The invention relates to non-dairy frozen confections, in particular to non-dairy frozen confections which comprise *Chlorella* protein in combination with pulse protein.

### Background of the invention

Foods which are free from animal products are a growing consumer trend, which is thought to be driven by increasing health and environmental consciousness. As a result, there is currently an increased consumer demand for frozen confections which are not based on dairy ingredients.

Frozen confections where some or all of the dairy ingredients have been replaced with plant-based ingredients are commercially available. For instance, pulse protein (such as soy protein or pea protein) is becoming more widely used in frozen confections. However, the flavour and texture of frozen confections formulated with certain pulse proteins is still unappealing to some consumers. In particular, their widespread acceptance is hindered by issues around their taste, since pulse proteins tend to have an inherent taste that formulators must mask in order to create a neutral product base.

US 2011/0256282 A1 discloses food compositions comprising algal biomass or algal flour with a high lipid content. Example 13 discloses a chocolate ice cream comprising algal flour (having a 55% lipid content) which is said to have improved mouthfeel and texture compared to an ice cream made without algal flour. However, the ice cream formulations in this example are dairy formulations containing significant quantities of dairy ingredients (i.e. skim milk, cream, and nonfat dry milk). Example 3 discloses a frozen dessert made from algal milk, and which comprises a lower level of dairy ingredients (i.e. 3 wt% whey protein concentrate) than Example 13. In this instance, the ice cream made from algal milk was found to lack the overall creaminess and mouthfeel of the conventional recipe ice cream, with the mouthfeel and texture said to be comparable to a rich tasting ice milk.

There is consumer demand for frozen confections that are dairy-free, but with the creamy mouthfeel and texture of regular ice cream. Therefore, there remains a need for improved formulations for non-dairy frozen confections which overcome one or more of the drawbacks associated with current formulations.

### Summary of the invention

We have found that non-dairy frozen confections with favourable texture and sensorial properties can be formulated using a combination of *Chlorella* protein and pulse protein. Thus, in a first aspect the present invention is directed to a non-dairy frozen confection comprising fat in an amount of 1 to 10 wt%, sugars in an amount of 15 to 35 wt%, and protein in an amount of 0.2 to 3 wt%, wherein the protein comprises *Chlorella* protein P1 and pulse protein **P2.**

### Detailed description of the invention

The present invention relates to a non-dairy frozen confection. As used herein the term non-dairy means that the frozen confection does not comprise any ingredients derived from milk, including milk protein and butterfat. Furthermore, it is preferred that the frozen confection is essentially free of animal-derived ingredients (such as egg yolk), and thus comprises animal-derived ingredients in an amount of less than 0.1 wt%, preferably less than 0.05 wt%, more preferably less than 0.01 wt%, most preferably 0 wt%.

The non-dairy frozen confection comprises protein in an amount of no more than 3 wt%, preferably no more than 2 wt%, no more than 1.5 wt%, or even no more than 1 wt%. The non-dairy frozen confection comprises protein in an amount of at least 0.2 wt%, preferably at least 0.3 wt%, at least 0.4 wt%, or even at least 0.5 wt%.

The protein comprises *Chlorella* protein **P1** and pulse protein **P2.** Use of *Chlorella* protein **P1** imparts improved textural properties. The non-dairy frozen confection preferably comprises the *Chlorella* protein **P1** in an amount of at least 0.2 wt%, at least 0.25 wt%, at least 0.3 wt%, at least 0.4 wt%, or even at least 0.5 wt%. The non-dairy frozen confection preferably comprises the *Chlorella* protein **P1** in an amount of no more than 1.5 wt%, no more than 1 wt%, or even no more than 0.8 wt%.

The protein to additionally comprise pulse protein **P2.** The frozen confection preferably comprises the pulse protein **P2** in an amount of at least 0.1 wt%, at least 0.2 wt%, at least 0.25 wt%, or even at least 0.3 wt%. The non-dairy frozen confection preferably comprises the pulse protein **P2** in an amount of no more than 2.5 wt%, no more than 2 wt%, no more than 1.5 wt%, or even no more than 1 wt%. The pulse protein **P2** is preferably be selected from the group consisting of: carob protein, fava bean protein, pea protein, soy protein, and mixtures thereof. Pea protein or soy protein are particularly preferred.

The weight ratio of *Chlorella* protein to pulse protein (**P1:P2**) is preferably from 4:1 to 1:4, from 4:1 to 1:3, from 4:1 to 1:2, from 4:1 to 1:1, from 3:1 to 1:4, from 3:1 to 1:3, from 3:1 to 1:2, from 3:1 to 1:1, from 2:1 to 1:4, from 2:1 to 1:3, from 2:1 to 1:2, from 2:1 to 1:1, from 1:1 to 1:4, from 1:1 to 1:3, or even from 1:1 to 1:2. It is particularly preferred that the weight ratio of *Chlorella* protein to pulse protein (**P1:P2**) is from 2:1 to 1:3.

The *Chlorella* protein is preferably provided by *Chlorella* biomass. *Chlorella* biomass is derived from cells of a species of the *Chlorella* genus, and preferably from cells of *Chlorella vulgaris.* The microalgae *Chlorella vulgaris* has been produced commercially as a food and dietary supplement for many years. *Chlorella* biomass is commercially available, e.g. *Chlorella* powder is sold under the Allma brand (Allmicroalgae - Natural Products S.A.). *Chlorella* biomass from white *Chlorella* is particularly preferred. For example, *Chlorella* biomass sourced from chlorophyll-deficient strains of *Chlorella vulgaris.* White *Chlorella* powder is commercially available (e.g. under the Allma brand).

The *Chlorella* biomass contains a significant amount of protein. For example, the *Chlorella* biomass preferably comprises *Chlorella* protein in an amount of at least 20 wt%, at least 25 wt% by dry weight, or even at least 30 wt% by dry weight. The *Chlorella* biomass typically comprises *Chlorella* protein in an amount of no more than 65 wt%, or no more than 60 wt%, or even no more than 55 wt% by dry weight.

In addition to the *Chlorella* protein, the *Chlorella* biomass may comprise one or more of: carbohydrate, dietary fibre, and fat. The *Chlorella* biomass is a low-fat material, and typically comprises less than 15% fat by dry weight. For example, the *Chlorella* biomass preferably comprises fat in an amount of 1% to 15%, or even 2% to 10% by dry weight. The *Chlorella* biomass preferably comprises carbohydrate in an amount of 7.5% to 25% by dry weight. The *Chlorella* biomass preferably comprises dietary fibre in an amount of 7.5% to 25% by dry weight.

High amounts of *Chlorella* biomass may affect certain sensorial properties of the frozen confection (e.g. colour, taste, smell). Thus, the non-dairy frozen confection preferably comprises *Chlorella* biomass in an amount of no more than 2.8 wt%, no more than 2.7 wt%, no more than 2.6 wt%, no more than 2.5 wt%, or even no more than 2.4 wt%. On the other hand, low amounts of *Chlorella* biomass may provide insufficient *Chlorella* protein to achieve textural advantages. The non-dairy frozen confection preferably comprises *Chlorella* biomass in an amount of at least 0.5 wt%, at least 0.6 wt%, at least 0.7 wt%, or even at least 0.8 wt%.

The non-dairy frozen confection comprises fat in an amount of 1 to 10 wt%. In order to provide a frozen confection which is similar to an ice cream, the frozen confection comprises fat in an amount of at least 1 wt%, preferably at least 2 wt%, at least 2.5 wt%, or even at least 3 wt%. The frozen confection comprises fat in an amount of no more than 10 wt%, preferably no more than 8 wt%, no more than 6 wt%, or even no more than 5.5 wt%. The fat is preferably vegetable fat (such as coconut oil, palm oil, palm kernel oil, or a mixture thereof), and it is particularly preferred that the fat is coconut oil.

The frozen confection comprises sugars in an amount of 15 to 35 wt%. Sugars are used in almost all types of frozen confection and have two major functions: delivering sweetness and controlling the amount of ice. As used herein the term "sugars" includes monosaccharides and disaccharides. Monosaccharides include glucose, fructose, galactose and mannose. Disaccharides include sucrose, lactose and trehalose. Some ingredients commonly included in frozen confections may contribute to the amount of sugars. An example is corn syrup (sometimes called glucose syrup) - which is a mixture of monosaccharides, disaccharides and oligosaccharides.

High concentrations of sugars may contribute unwanted sweetness and or calories to the frozen confection. Therefore, the amount of sugars in the frozen confection is no more than 35 wt%, preferably no more than 32 wt%, no more than 30 wt%, no more than 28 wt%, or no more than 25 wt%. Conversely, low concentrations of sugars may be inappropriate if the frozen confection is a scoopable product, since a low concentration of sugars tend to result in frozen confections with a high ice content. Therefore, the amount of sugars in the frozen confection is at least 15 wt%, preferably at least 18 wt%, at least 20 wt%, or even at least 22 wt%.

The frozen confection may optionally comprise non-nutritive sweetener, such as aspartame, acesulfame K, erythritol, sucralose, or one or more steviol glycosides such as rebaudioside A. Mixtures of two or more non-nutritive sweeteners may also be used.

The non-dairy frozen confection preferably comprises an emulsifier and/or a stabilizer. Where present, the emulsifier may be a single emulsifier or a mixture of emulsifiers (such as mono-diglycerides and the like). For example, the frozen confection may comprise emulsifier in an amount of 0.05 wt% to 1 wt%, 0.1 wt% to 0.75 wt%, or 0.15 wt% to 0.5 wt%. Similarly, where present, the stabilizer may be a single stabilizer or a mixture of stabilizers. The stabilizer is preferably selected from the group consisting of: locust bean gum, xanthan gum, guar gum, carrageenan, tara gum, and mixtures thereof (for example, a mixture of locust bean gum and guar gum). The amount of stabiliser in the frozen confection is preferably 0.05 wt% to 1 wt%, 0.1 wt% to 0.75 wt%, or 0.15 wt% to 0.5 wt%.

The frozen confection is preferably aerated. As used herein the term "aerated" means that the confection has an overrun of at least 30%. Preferably the aerated frozen confection has an overrun of at least 40%, at least 60%, or even at least 80%. The maximum overrun of the aerated frozen confection is typically no more than 130%. Indeed, a maximum overrun of 120%, or even 110% is typically preferred. Overrun (with unit "%") is defined by the following equation:

$$overrun = \frac{volume\ of\ aerated\ product\ -\ volume\ of\ initial\ mix}{Volume\ of\ initial\ mix} \times 100\%$$

Overrun is measured at ambient temperature (20°C) and atmospheric pressure.

In a particularly preferred embodiment, the non-dairy frozen confection comprises:

- fat in an amount of 2 to 8 wt%;
- sugars in an amount of 20 to 30 wt%;
- protein in an amount of 0.2 to 2 wt%, wherein the protein comprises *Chlorella* protein **P1** and pulse protein **P2.**

The frozen confection may optionally comprise colours and/or flavours.

The frozen confection may optionally comprise further components, which include but are not limited to: inclusions, sauces, and/or toppings. Further components (where present) are usually added after the premix has been frozen.

The frozen confections of the present invention can be manufactured by any suitable method. The non-dairy frozen confection is typically made by freezing a premix (preferably a pasteurised premix) of ingredients such as water, fat, sugars, *Chlorella* protein, pulse protein, and optionally other ingredients such as emulsifiers, stabilizers, colours and flavours.

As set out above, the *Chlorella* protein can be conveniently provided by *Chlorella* biomass, particularly microfluidised *Chlorella* biomass. Thus, a convenient process for preparing the non-dairy frozen confection comprises the steps of:

(a) microfluidising a suspension of *Chlorella* biomass to provide microfluidised *Chlorella* biomass;
(b) combining the microfluidised *Chlorella* biomass with one or more additional frozen confection ingredients to provide a frozen confection premix; and
(c) freezing the premix.

The *Chlorella* biomass of step (a) is conveniently provided in the form of a powder and diluted to provide a suspension of mycoprotein biomass. The *Chlorella* biomass is typically diluted with water to provide the suspension. For example, the suspension of *Chlorella* biomass may preferably comprise *Chlorella* biomass in an amount of 10 to 30 wt% and water in an amount of 70 to 90 wt%.

In step (b) of the above process, the *Chlorella* biomass is combined with one or more additional frozen confection ingredients to provide a frozen confection premix. The one or more additional frozen confection ingredients preferably comprise fat. Where this is the case, step (b) will usually comprise a homogenisation step to provide an oil-in-water emulsion (i.e. the frozen confection premix is an oil-in-water emulsion).

The additional frozen confection ingredients may be any or all of the ingredients described above, such as fat, sugars, pulse protein, emulsifiers, stabilizers, colours and flavours.

As used herein the term frozen confection means a confection intended for consumption in the frozen state (i.e. where the temperature of the confection is less than 0°C, and preferably where the confection comprises significant amounts of ice). Definitions of various terms and techniques used in frozen confection manufacture are found in Ice Cream by H. Douglas Goff and Richard W. Hartel (2013, 7th Edition, ISBN 978-1-4614-6096-1).

Numerical ranges expressed in the format "from x to y" are understood to include x and y, and in specifying any range of values or amounts, any particular upper value or amount can be associated with any particular lower value or amount. Unless otherwise specified, wt% refers to weight percent based on the weight of the entire formulation (including water).

Except in the examples and comparative experiments, or where otherwise explicitly indicated, all numbers are to be understood as modified by the word "about". As used herein, the indefinite article "a" or "an" and its corresponding definite article "the" means at least one, or one or more, unless specified otherwise.

**Figures**

By way of example, the present invention is illustrated with reference to the following figures, in which:

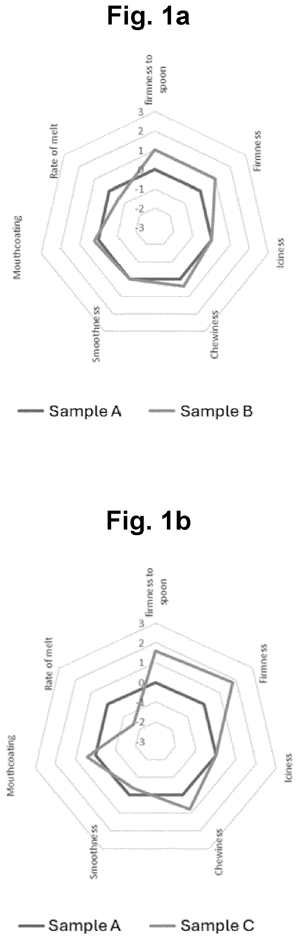

Figure 1a to 1c are plots of sensory data from Example 2.

**Examples**

The examples are intended to illustrate the invention and are not intended to limit the invention to those examples *per se.*

*Temperature abuse*

Frozen confections were subjected to temperature abuse in order to mimic the thermal regimes that may be encountered during distribution and storage. Two temperature abuse regimes were used: standard and enhanced. The standard temperature abuse regime involved storing samples in a temperature-controlled cabinet for 14 days, where the temperature of the cabinet was cycled (-20°C for 12 hours, -10°C for 12 hours). Following the 14 day regime, the samples were stored in a freezer for several days before testing.

*Meltdown*

Meltdown was measured for fresh samples, as well as for samples which had undergone temperature abuse. Blocks of frozen confection products (approximately 100 ml) were equilibrated at -22°C, weighed and then added to the centre a grated metal plate suspended above a mass balance. Samples were analysed in a cabinet at 20°C, with the mass of the melted product that passed through the grating being recorded over time for 2 hours.

## Example 1

*Chlorella* biomass (white Chlorella powder, obtained from Allma) was dispersed in water with mixing to provide a suspension. The suspension contained *Chlorella* biomass in an amount of ~13 wt%. The suspension was microfluidised at 1000 bars. The white *Chlorella* powder had a protein content of 30 wt% and contained 8% fat by dry weight.

## Example 2

Frozen confections containing pulse protein or *Chlorella* protein (provided by the microfluidised *Chlorella* biomass of Example 1) were prepared. The premix formulations are shown in Table 1.

**Table 1: non-dairy frozen confection premix formulations**

| Ingredient (wt%) | Sample | | | |
|---|---|---|---|---|
| | A | B | C | 1 |
| Coconut oil | 8 | 5 | 5 | 5 |
| *Chlorella* biomass of Example 1 (13 wt% suspension, microfluidised) | - | - | 17.95 | 7.69 |
| Pea protein (83%) | 1.2 | 0.84 | - | 0.48 |
| Sucrose | 14.03 | 12.3 | 12.3 | 12.3 |
| Glucose syrup (DE 28, DE 63) | 14.98 | 19.5 | 19.5 | 19.5 |
| Stabilizer | 0.3 | 0.3 | 0.3 | 0.3 |
| Emulsifier | 0.08 | 0.15 | 0.15 | 0.15 |
| Flavour | 0.37 | 0.22 | 0.22 | 0.22 |
| Water | to 100 | to 100 | to 100 | to 100 |
| *Chlorella* biomass (dry weight) | - | - | 2.33 | 1 |
| Pulse protein | 1 | 0.7 | - | 0.4 |
| *Chlorella* protein | - | - | 0.7 | 0.3 |
| Total protein | 1 | 0.7 | 0.7 | 0.7 |

Briefly, the ingredients (excluding coconut oil) were combined and mixed with heating (60°C to 75°C), followed by addition of the coconut oil and further mixing. The premixes were pasteurised and homogenised, and then aged overnight at 4°C. After the ageing step, the premixes were frozen. The air input was controlled to give a target overrun of 100%, and freezing was controlled to give a target extrusion temperature of -4 to -7°C.

*Physical properties*

The meltdown properties of the frozen confections were measured using the method described above. All of the samples provided frozen confections which were resilient to meltdown (losing ≤ 30% in mass).

*Sensorial properties*

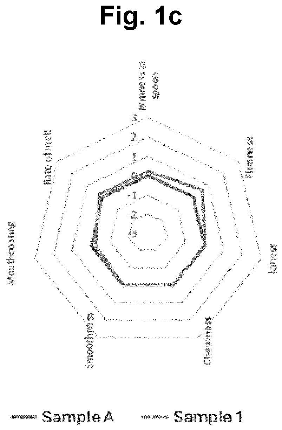

Sensory analysis of the samples was conducted by 5 panellists. In all cases, these assessments related to samples which had undergone temperature abuse prior to being assessed. The sensory data is shown in the plots of Figures 1a to 1c. Figure 1a is a comparison of sensory properties for Sample A and Sample B, Figure 1b is a comparison of sensory properties for Sample A and Sample C, and Figure 1c is a comparison of sensory properties for Sample A and Sample 1.

Sample A is a commercial non-dairy frozen confection formulation comprising 8 wt% fat and pea protein. Reducing the fat content to 5 wt% (Sample B) impacts the sensorial properties - particularly in relation to firmness (Figure 1a). The impact on sensorial properties is even more pronounced for Sample C, which comprises *Chlorella* protein instead of pea protein (Figure 1b). Surprisingly, Sample 1 - which is formulated using a combination of pea protein and *Chlorella* protein - closely matches the sensorial properties of Sample A (Figure 1c). This is particularly remarkable, as Sample 1 has considerably reduced levels of both fat and protein compared to Sample A.

**Claims**

1.  Non-dairy frozen confection comprising:

    • fat in an amount of 1 to 10 wt%,
    • sugars in an amount of 15 to 35 wt%, and
    • protein in an amount of 0.2 to 3 wt%,

    wherein the protein comprises *Chlorella* protein **P1** and pulse protein **P2.**

2.  Non-dairy frozen confection as claimed in claim 1, wherein the *Chlorella* protein is provided by *Chlorella* biomass

3.  Non-dairy frozen confection as claimed in claim 2, wherein the *Chlorella* biomass comprises less than 15% fat by dry weight.

4.  Non-dairy frozen confection as claimed in claim 2 or claim 3, comprising the *Chlorella* biomass in an amount of to 0.5 to 2.5 wt%.

5.  Non-dairy frozen confection as claimed in any one of claims 1 to 4, wherein the weight ratio of *Chlorella* protein to pulse protein **P1:P2** is from 4:1 to 1:4, preferably from 2:1 to 1:3.

6.  Non-dairy frozen confection as claimed in any one of claims 1 to 5, wherein the frozen confection comprises protein in an amount of 0.3 to 2 wt%.

7.  Non-dairy frozen confection as claimed in any one of claims 1 to 6, wherein the frozen confection comprises fat in an amount of 3 to 6 wt%.

8.  Non-dairy frozen confection as claimed in any one of claims 1 to 7, wherein the frozen confection comprises sugars in an amount of 20 wt% to 30 wt%.

9.  Non-dairy frozen confection as claimed in any one of claims 1 to 8, wherein the frozen confection comprises *Chlorella* protein in an amount of 0.2 to 1 wt%, preferably 0.2 to 0.8 wt%.

10.  Non-dairy frozen confection as claimed in any one of claims 1 to 9, wherein the protein comprises the pulse protein in an amount of 0.2 to 2 wt%, preferably 0.3 to 1.5 wt%.

11.  Non-dairy frozen confection as claimed in any one of claims 1 to 10, wherein the frozen confection has an overrun of 80 to 120%.

12.  Non-dairy frozen confection as claimed in any one of claims 1 to 11, wherein the frozen confection comprises emulsifier in an amount of 0.05 to 1 wt%.

13. Non-dairy frozen confection as claimed in any one of claims 1 to 12, wherein the frozen confection comprises stabilizer in an amount of 0.05 to 1 wt%.

14. Non-dairy frozen confection as claimed in any one of claims 1 to 13, comprising:

  • fat in an amount of 2 to 8 wt%;
  • sugars in an amount of 20 to 30 wt%;
  • protein in an amount of 0.2 to 2 wt.

# Fig. 1a

— Sample A    — Sample B

# Fig. 1b

— Sample A    — Sample C

# Fig. 1c

Firmness to spoon
Firmness
Iciness
Chewiness
Smoothness
Mouthcoating
Rate of melt

Sample A    Sample 1

| | Europäisches Patentamt European Patent Office Office européen des brevets | **EUROPEAN SEARCH REPORT** | **Application Number** EP 24 21 2795 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE GNPD [Online] MINTEL; 8 April 2024 (2024-04-08), anonymous: "Pandan Gula Melaka Plant-Based Frozen Dessert", XP093267555, Database accession no. 11613366 | 1-3,5-14 | INV. A23G9/04 A23G9/38 A23G9/42 |
| A | * the whole document * ----- | 4 | |
| A | WO 2024/208752 A1 (UNILEVER IP HOLDINGS B V [NL]; CONOPCO INC DBA UNILEVER [US]) 10 October 2024 (2024-10-10) * page 11, lines 11-15; claims; examples * ----- | 1-14 | |
| A | DATABASE GNPD [Online] MINTEL; 9 June 2016 (2016-06-09), anonymous: "Green Tea & Red Bean Ice Cream", XP093267557, Database accession no. 4038427 * the whole document * ----- | 1-14 | |

**TECHNICAL FIELDS SEARCHED (IPC)**

A23G

The present search report has been drawn up for all claims

| Place of search | Date of completion of the search | Examiner |
|---|---|---|
| The Hague | 9 April 2025 | Bondar, Daniela |

EPO FORM 1503 03.82 (P04C01)

## ANNEX TO THE EUROPEAN SEARCH REPORT
## ON EUROPEAN PATENT APPLICATION NO.

EP 24 21 2795

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2025

| Patent document cited in search report | Publication date | Patent family member(s) | Publication date |
|---|---|---|---|
| WO 2024208752 A1 | 10-10-2024 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110256282 A1


**Non-patent literature cited in the description**

- **H. DOUGLAS GOFF** ; **RICHARD W. HARTEL**. Ice Cream. 2013